Europäisches Patentamt

European Patent Office

Office européen des brevets

(11) Veröffentlichungsnummer: **0 166 274**
A2

(19)

(12) # EUROPÄISCHE PATENTANMELDUNG

(21) Anmeldenummer: **85106924.5**

(22) Anmeldetag: **04.06.85**

(51) Int. Cl.⁴: **H 04 L 7/04,** H 04 J 3/06,
H 04 J 3/14

(30) Priorität: **04.06.84 DE 3420768**

(43) Veröffentlichungstag der Anmeldung: **02.01.86
Patentblatt 86/1**

(84) Benannte Vertragsstaaten: **AT BE CH DE LI NL**

(71) Anmelder: **Siemens Aktiengesellschaft, Berlin und
München Wittelsbacherplatz 2, D-8000 München 2 (DE)**

(72) Erfinder: **Kloppe, Karl, Dipl.-Phys., Parkstrasse 27,
D-8000 München 2 (DE)**

(54) **Schaltungsanordnung zum Ermitteln bestimmter Bitmuster, insbesondere von Synchronisiersignale und Prüfschleifensignale bildenden Bitmustern in seriell auftretenden binären Signalen.**

(57) Zum Ermitteln bestimmter Bitmuster in auf einer Mehrzahl von Signalleitungen (e1, e2, e3) seriell auftretenden binären Signalen dient eine Registeranordnung (Reg) für die serielle Aufnahme der binären Signale. Ein als Vergleichsanordnung wirksamer Mikroprozessor (Mp) vergleicht jeweils eine
vorgegebene Anzahl von Bits der jeweils aufgenommenen binären Signale mit wenigstens einer vorgegebenen Kombination. Bei Feststellen einer Übereinstimmung zwischen der jeweiligen Bitkombination und den in der vorgegebenen Anzahl
erfaßten Bits der aufgenommenen binären Signale gibt der Mikroprozessor (Mp) ein Einstellsignal an einen Zähler (Cnt), der
die Anzahl der von der Registeranordnung (Reg) jeweils aufgenommenen Bits zählt und der bei Erreichen einer bestimmten Zählerstellung die Übernahme des Registerinhalts in eine
Signalübernahmeschaltung (Tr2, Bf) steuert, von der aus der
betreffende Registerinhalt von einer Verarbeitungseinrichtung
(Mp) übernommen werden kann.

Siemens Aktiengesellschaft   _1_
Berlin und München

0166274

Unser Zeichen
VPA 84 P 1425 E

Schaltungsanordnung zum Ermitteln bestimmter Bitmuster, insbesondere von Synchronisiersignale und Prüfschleifensignale bildenden Bitmustern in seriell auftretenden binären Signalen

Die Erfindung bezieht sich auf eine Schaltungsanordnung zum Ermitteln bestimmter Bitmuster, insbesondere von Synchronisiersignale und Prüfschleifensignale bildenden Bitmustern, in auf einer Mehrzahl von Signalleitungen seriell auftretenden binären Signalen, mit einer Registeranordnung für die serielle Aufnahme der betreffenden binären Signale und mit einer Vergleicheranordnung, welche jeweils eine vorgegebene Anzahl von Bits der jeweils aufgenommenen binären Signale mit wenigstens einer vorgegebenen Bitkombination vergleicht und welche bei Feststellen einer Übereinstimmung zwischen der jeweiligen Bitkombination und den in der vorgegebenen Anzahl erfaßten Bits der aufgenommenen binären Signale ein die Ermittlung eines bestimmten Bitmusters anzeigendes Meldesignal abgibt.

Es ist bereits eine Schaltungsanordnung bekannt (DE-PS 31 03 574), mit deren Hilfe der Gleichlauf zwischen den von örtlich erzeugten Bittaktimpulsen abgeleiteten Envelopetaktimpulsen und den in Envelopes eines binär codierten Signals regelmäßig an einer vorgegebenen Bitstelle enthaltenen Synchronisierbits vorgegebener Polaritätsaufeinanderfolge hergestellt und aufrecht erhalten wird. Die betreffende bekannte Schaltungsanordnung weist dazu ein Schieberegister auf, welchem die einzelnen seriell auftretenden binären Signale zugeführt werden. Mit den Ausgängen der einzelnen Schieberegisterstufen ist eine Schalteranordnung verbunden, die jeweils nur den Ausgang einer Schiebe-

registerstufe mit der Eingangsseite einer Vergleicheranordnung wirksam verbindet. Diese Vergleicheranordnung vergleicht das ihr über die Schalteranordnung jeweils zugeführte Bit mit einem Bit einer vorgegebenen Bitfolge. Bei fehlender Übereinstimmung der so in der Vergleicheranordnung miteinander verglichenen Bits gibt die betreffende Vergleicheranordnung ein Einstellsignal an die erwähnte Schalteranordnung ab, deren Einstellung daraufhin geändert wird. Lediglich bei Feststellen einer Übereinstimmung der miteinander verglichenen Bits gibt die Vergleicheranordnung ein Meldesignal ab, welches zum einen die Ermittlung eines bestimmten Bitmusters anzeigt und welches zum anderen zur Stillsetzung der erwähnten Schalteranordnung führt. Obwohl es mit Hilfe dieser bekannten Schaltungsanordnung möglich ist, bestimmte Bitmuster in einem seriell auftretenden binären Signal zu ermitteln, ist es jedoch nicht ohne weiteres möglich, solche, aus unmittelbar aufeinanderfolgenden Bits bestehende Bitmuster zu ermitteln. Überdies ist es bei der betrachteten bekannten Schaltungsanordnung nicht ohne weiteres möglich, auf einer Mehrzahl von Signalleitungen seriell auftretende binäre Signale hinsichtlich des Vorliegens bestimmter Bitmuster zu überprüfen.

Der Erfindung liegt demgemäß die Aufgabe zugrunde, einen Weg zu zeigen, wie bei einer Schaltungsanordnung der eingangs genannten Art mit relativ geringem schaltungstechnischen Aufwand bestimmte Bitmuster in auf einer Mehrzahl von Signalleitungen seriell auftretenden binären Signalen ermittelt werden können, wobei die Bits dieser Bitmuster in den betreffenden binären Signalen unmittelbar aufeinander folgen.

Gelöst wird die vorstehend aufgezeigte Aufgabe bei einer Schaltungsanordnung der eingangs genannten Art erfindungsgemäß dadurch, daß die Registeranordnung den einzelnen Signalleitungen individuell zugeordnete Register- bzw.

84 P 1 1 2 5 E 0166274

Speicherbereiche des Mikroprozessors bzw. Mikrocomputers umfaßt, daß jedes Register bzw. jeder Speicherbereich eingangsseitig am Ausgang eines in der zugehörigen Signalleitung liegenden taktgesteuerten bistabilen Kippgliedes angeschlossen und ausgangsseitig mit einer Signalübernahmeschaltung verbunden ist, daß jede Signalübernahmeschaltung von dem Mikroprozessor bzw. Mikrocomputer her entsprechend dem Takt von die Taktsteuerung der bistabilen Kippglieder bewirkenden Taktimpulsen den Inhalt ihres zugehörigen Registers bzw. Speicherbereiches zu dem Mikroprozessor bzw. Mikrocomputer überträgt, in welchem dieser Inhalt mit der jeweiligen vorgegebenen Bitkombination verglichen wird, daß bei Ermittlung einer Übereinstimmung der betreffenden Bits der jeweiligen Bitkombination von dem Mikroprozessor bzw. Mikrocomputer ein Einstellsignal an einen durch die der zugehörigen Registeranordnung zugeführten Bits in seiner Zählerstellung veränderbaren Zähler abgegeben wird, der daraufhin in eine definierte Zählerstellung gebracht wird, und daß der der jeweiligen Signalübernahmeschaltung zugehörige Zähler sodann jeweils bei Erreichen einer vorgegebenen Zählerstellung ein Ausgangssignal abgibt, mit dessen Hilfe die Übernahme der in dem zugehörigen Register- bzw. Speicherbereich der betreffenden Signalübernahmeschaltung enthaltenen Bits in eine Verarbeitungseinrichtung gesteuert wird.

Die Erfindung bringt den Vorteil mit sich, daß mit einem insgesamt besonders geringen schaltungstechnischen Aufwand ausgekommen werden kann, um auf einer Mehrzahl von Signalleitungen seriell auftretende binäre Signale hinsichtlich des Vorliegens von bestimmten Bitmustern überprüfen zu können, deren Bits unmittelbar aufeinander folgen können. Dabei kann das Vorliegen wenigstens eines bestimmten Bitmusters (z.B. Prüfschleifensignal) ständig erfolgen, und das Vorliegen wenigstens eines weiteren bestimmten Bitmusters (Synchronisiersignal) kann in Abhängigkeit vom Auftreten eines gesonderten Auftragssignals erfolgen.

Zweckmäßigerweise sind die in den einzelnen Signalleitungen liegenden bistabilen Kippglieder alle gemeinsam durch ein einziges Taktsignal bildende Taktimpulse taktgesteuert.

Hierdurch ergibt sich der Vorteil eines besonders geringen Steuerungsaufwandes für die einzelnen bistabilen Kippglieder bezüglich der Übernahme und Auswertung der einzelnen Bits in den den Signalleitungen individuell zugeordneten Registern bzw. Speicherbereichen.

Vorzugsweise umfaßt die jeweilige Signalübernahmeschaltung gesonderte Signalübertragungsschaltungen, deren eine durch Steuersignale vom Mikroprozessor bzw. Mikrocomputer her ansteuerbar ist und deren andere durch Steuersignale von dem zugehörigen Zähler her ansteuerbar ist. Durch diese Schaltungsmaßnahme wird der Vorteil erzielt, bezüglich der Übernahme der in den einzelnen Registern bzw. Speicherbereichen enthaltenen Bits einfach hinsichtlich der Verwendung dieser Bits unterscheiden zu können, also darüber, ob ein bestimmtes Bitmuster in den betreffenden Bits zu ermitteln ist oder ob die betreffenden Bits zu der Verarbeitungseinrichtung hin zum Zwecke der weiteren Verarbeitung weiterzuleiten sind.

Anhand einer Zeichnung wird die Erfindung nachstehend an einem Ausführungsbeispiel näher erläutert.

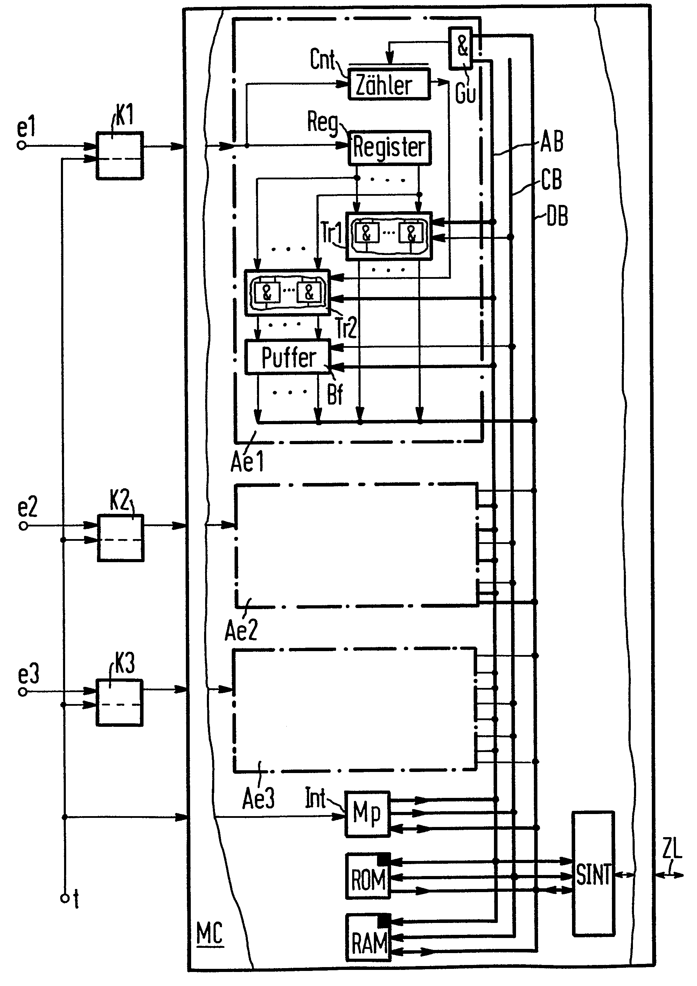

In der Zeichnung ist schematisch eine Schaltungsanordnung gezeigt, die eine Mehrzahl von Signalleitungen, nämlich im vorliegenden Fall drei Signalleitungen e1, e2, e3 aufweist. Über sämtliche Signalleitungen, die Datensignale entsprechend der CCITT-Empfehlung X.21 führen können, werden die einzelnen Bits von binären Signalen jeweils mit ein und derselben Frequenz seriell übertragen. Die einzelnen

0166274

Binärsignale können dabei allerdings mit unterschiedlichen Phasenlagen auftreten. Den Signalleitungen el bis e3 sind im vorliegenden Fall durch einzelne bistabile Kippglieder gebildete Signalaufnahmeeinrichtungen individuell zugehörig. Der Signalleitung el ist das bistabile Kippglied K1 zugehörig, der Signalleitung e2 ist das bistabile Kippglied K2 zugehörig, und der Signalleitung e3 ist das bistabile Kippglied K3 zugehörig. Diese bistabilen Kippglieder sind taktgesteuerte Kippglieder, die mit ihren Takteingängen gemeinsam an einem Taktanschluß t angeschlossen sind und deren Signaleingänge mit den erwähnten Signalleitungen el, e2 bzw. e3 verbunden sind.

Den einzelnen bistabilen Kippgliedern K1, K2, K3 bzw. den mit diesen verbundenen Signalleitungen el, e2 bzw. e3 sind einzelne Signalaufnahmeeinrichtungen Ael, Ae2 bzw. Ae3 zugehörig, die im vorliegenden Fall Teil eines Mikrocomputers MC bilden. Die betreffenden Signalaufnahmeeinrichtungen sind alle gleich aufgebaut, weshalb lediglich die Signalaufnahmeeinrichtung Ael in ihrem möglichen Aufbau näher veranschaulicht ist.

Die Signalaufnahmeeinrichtung Ael weist ein als Schieberegister ausgebildetes Register Reg auf, welches eingangsseitig mit dem Signalausgang des zugehörigen bistabilen Kippgliedes K1 verbunden ist. Mit dem Signalausgang des betreffenden bistabilen Kippgliedes K1 ist ferner der Zähleingang eines Zählers Cnt verbunden, dessen Zählerstellung durch jedes vom Signalausgang des bistabilen Kippgliedes K1 abgegebene Bit erhöht oder herabgesetzt wird. Dies bedeutet, daß der betreffende Zähler Cnt im Rhythmus der Taktimpulse weiterzählt, die den Takteingängen der erwähnten bistabilen Kippglieder zugeführt werden. In diesem Zusammenhang ist es möglich, daß dem Zähleingang des Zählers Cnt die betreffenden Taktimpulse oder aus diesen abgeleitete, in der Taktrate untersetzte Impulse direkt zugeführt werden.

Mit der Ausgangsseite, das heißt mit den Parallelausgängen des Registers Reg - welches eine solche Kapazität aufweist, daß es zumindest die zu einem zu suchenden Bitmuster gehörenden Bits aufzunehmen vermag - ist eine Signalübernahmeschaltung verbunden, die im vorliegenden Fall aus zwei gesonderten Signalübertragungsschaltungen besteht. Die eine Signalübertragungsschaltung umfaßt lediglich eine Signal-übertragungs-Verknüpfungsgliedanordnung Tr1, und die andere Signalübertragungsschaltung umfaßt eine Signalübertragungs-Verknüpfungsgliedanordnung Tr2 und einen dieser nachgeschalteten Puffer Bf. Die beiden Signalübertragungs-Verknüpfungsgliedanordnungen Tr1, Tr2 können jeweils eine der Anzahl der Registerstufen des Registers Reg entsprechende Anzahl von UND-Gliedern aufweisen, deren eine Eingänge an den Ausgängen der betreffenden Registerstufen angeschlossen sind und deren andere Eingänge an Steuerleitungen angeschlossen sind. Bezüglich des Puffers Bf sei hier angemerkt, daß dieser eine der Anzahl der Verknüpfungsglieder der Signalübertragungs-Verknüpfungsgliedanordnung Tr2 entsprechende Anzahl von Pufferstufen aufweisen wird, um die ihm eingangsseitig zugeführten Bits parallel zu übernehmen und an Parallelausgängen abzugeben. Die erwähnten Parallelausgänge des Puffers Bf sind mit entsprechenden Ausgängen der Signalübertragungs-Verknüpfungsgliedanordnung Tr1 an entsprechenden Datenleitungen einer Datenbusleitung DB angeschlossen, die zu einem Busleitungssystem des Mikrocomputers MC gehört.

Zu dem gerade erwähnten Busleitungssystem gehören neben der Datenbusleitung DB noch eine Steuerbusleitung CB und eine Adreßbusleitung AB. Jede dieser drei Adreßbusleitungen AB, CB, DB weist eine Mehrzahl von Einzelleitungen, beispielsweise jeweils acht Einzelleitungen auf. Mit zu-

0166274

mindest einigen der Einzelleitungen der Steuerbusleitung CB sind Steuereingänge der Signalübertragungs-Verknüpfungsgliedanordnung Tr1 und des Puffers Bf verbunden. Mit zumindest einigen der Einzelleitungen der Adreßbusleitung AB sind Adresseneingänge der Signalübertragungs-Verknüpfungsgliedanordnungen Tr1, Tr2 und des Puffers Bf verbunden. Diese Schaltungselemente können somit durch entsprechende Adressen bezeichnet und damit ausgewählt werden. Für ihre Wirksamsteuerung sind jedoch noch Steuersignale erforderlich, die im Falle der Signalübertragungs-Verknüpfungsgliedanordnung Tr2 nicht von der Adreßbusleitung CB her kommen, sondern die im vorliegenden Fall von einem Ausgang des Zählers Cnt abgegeben werden. Hierauf wird weiter unten noch näher eingegangen werden.

Bezüglich des gerade erwähnten Zählers Cnt sei noch angemerkt, daß dieser mit einem Rücksetzeingang am Ausgang eines durch ein UND-Glied gebildeten Verknüpfungsgliedes Gu angeschlossen ist. Dieses Verknüpfungsglied Gu ist eingangsseitig an zumindest einigen der Einzelleitungen der Adreßbusleitung AB und der Datenbusleitung DB angeschlossen. Es ist aber auch möglich, das betreffende Verknüpfungsglied Gu eingangsseitig mit zumindest einigen Einzelleitungen der Adreßbusleitung AB und der Steuerbusleitung CB zu verbinden.

Mit dem zuvor betrachteten Busleitungssystem, umfassend die Adreßbusleitung AB, die Steuerbusleitung CB und die datenbusleitung DB, ist ferner ein Mikroprozessorsystem verbunden, zu dem ein Mikroprozessor Mp, ein Programmspeicher ROM und ein Datenspeicher RAM gehören. Diese Elemente sind, wie im unteren Teil der Figur angedeutet, eingangs- bzw. ausgangsseitig mit sämtlichen Busleitungen des betrachteten Busleitungssystems verbunden. Der Mikroprozessor Mp ist überdies mit einem Unterbrechungssteuereingang Int an dem bereits erwähnten Taktsignalanschluß t angeschlossen. Dadurch wird der Mikroprozessor Mp im Rhythmus der an diesem Eingang auftretenden Taktimpulse gesteuert, wie dies weiter unten noch ersichtlich werden wird.

Mit dem Busleitungssystem ist ferner eine Schnittstellenschaltung SINT sowohl eingangs- als auch ausgangsseitig verbunden. Diese Schnittstellenschaltung, die beispielsweise ein auch als USART-Baustein bekannter universeller synchron bzw. asynchron arbeitender Empfangs- und Sende-Baustein sein kann, ist mit einem Serienausgang an einer Zweidrahtleitung ZL geschlossen, über die binäre Signale von dem betreffenden Schnittstellenbaustein und damit von dem Mikrocomputer MC entweder abgegeben oder aufgenommen werden könnnen.

Nachdem zuvor der Aufbau der in der Zeichnung dargetellten Schaltungsanordnung erläutert worden ist, sei nunmehr die Arbeitsweise dieser Schaltungsanordnung betrachtet. Dazu sei auf die Signalaufnahmeeinrichtung Ael Bezug genommen. Außerdem sei an dieser Stelle angemerkt, daß mit der betreffenden Anordnung im vorliegenden Fall ein bestimmtes Bitmuster in dem auf der Signalleitung el auftretenden binären Signal ermittelt werden soll.

Die auf der Signalleitung el auftretenden, taktgesteuert von dem zugehörigen bistabilen Kippglied Kl abgegebenen Bits gelangen seriell in das zugehörige Register Reg hinein. Außerdem bewirken sie das Weiterzählen des Zählers Cnt, der sich zunächst in irgendeiner beliebigen Zählerstellung befinden mag. Mit jeder Übernahme eines Bits in das Register Reg wird dessen Inhalt über die von dem Mikroprozessor Mp entsprechend dem Takt der am Anschluß t auftretenden Taktimpulse wirksam gesteuerte Signalübertragungs-Verknüpfungsgliedanordnung Trl an die Datenbusleitung DB abgegeben. Diese Bits werden damit zu dem Mikroprozessor Mp hin übertragen, der die betreffenden Bits aufnimmt und sie mit zumindest einer vorgegebenen Bitkombination vergleicht. Die jeweilige vorgegebene Bitkombination kann dabei beispielsweise in dem Speicher ROM gespeichert sein, der als Festwertspeicher normalerweise lediglich die Programmdaten speichert. Es ist aber auch möglich, die betreffenden Bitkombinationen in dem als Schreib/Lesespeicher ausgebildeten Speicher RAM gespeichert zu halten und von dem Mikroprozessor Mp zum Zwecke des durchzuführenden Vergleichs abzurufen. Stellt der Mikroprozessor MP eine Übereinstimmung der von dem Register Reg gerade aufgenommenen Bits mit einer der vorgegebenen Bitkombinationen fest, so gibt der Mikroprozessor Mp ein das UND-Glied Gu adressierendes Adressensignal über die Adreßbusleitung AB und ein weiteres Signal über die Datenbusleitung DB ab, wodurch das UND-Glied Gu in den übertragungsfähigen Zustand gelangen mag und ausgangsseitig ein Binärsignal "1" abgeben mag. Dieses Binärsignal "1" führt im vorliegenden Fall dazu, daß der Zähler Cnt in eine definierte Zählerstellung, beispielsweise in seine Ausgangszählerstellung, eingestellt wird. Von nun an wird das an dem oben erwähnten bestimmten Ausgang des Zählers Cnt bei Erreichen einer bestimmten Zählerstellung, z.B. 8, d.h. entsprechend der Anzahl der ein Zeichen bildenden Bits auftretende Steuersignal dazu heranbezogen, die Signalübertragungs- Verknüpfungsgliedanordnung Tr2 in den übertragungsfähigen Zustand zu steuern. Im vorliegenden Fall geschieht dies in Verbindung mit einem auf der Adreßbusleitung AB auftretenden Adressensignal. Es sei an dieser Stelle jedoch angemerkt, daß auch ohne dieses Adressensignal ausgekommen werden kann, um den Inhalt des Registers Reg zu dem Puffer Bf hin zu leiten. Dieser Puffer Bf nimmt die ihm eingangsseitig zugeführten Bits nur dann auf, wenn er von der Adreßbusleitung AB und der Steuerbusleitung CB entsprechende Signale zugeführt erhält.

Die von dem Puffer Bf abgegebenen Signale gelangen auf die Datenbusleitung DB und werden der Mikroprozessoranordnung, insbesondere dem Mikroprozessor Mp zugeführt, der als Verarbeitungseinrichtung die betreffenden Signale aufnimmt und gegebenenfalls an die Schnittstellenschaltung SINT für eine Weiterleitung abgibt. Es wäre aber auch denkbar, die betreffenden Signale vom Puffer Bf über die Datenbusleitung DB sogleich an die Schnittstellenschaltung SINT hinzuleiten, und zwar durch eine Kommandosteuerung von dem Mikroprozessor Mp.

Durch die vorstehend beschriebene Schaltungsanordnung können nun nicht nur auf einer Signalleitung seriell auftretende binäre Signale hinsichtlich des Vorliegens zumindest eines bestimmten Bitmusters überprüft werden, sondern die beschriebene Schaltungsanordnung kann vielmehr bestimmte Bitmuster in auf einer Mehrzahl von Signalleitungen seriell auftretenden binären Signalen ermitteln. Die den einzelnen Signalleitungen in dem dargestellten Mikrocomputer MC zugehörigen Signalaufnahmeeinrichtungen Ae1, Ae2 bzw. Ae3 werden dabei von dem Mikroprozessor Mp des Mikrocomputers MC nacheinander angesteuert, um die in den zugehörigen Registern enthaltenen Bits für die Durchführung von Vergleichsvorgängen abzurufen. Bei den erwähnten bestimmten Bitmustern kann es sich insbesondere um solche Bitmuster handeln, welche Synchronisiersignale bilden, die im Zusammenhang mit der Übertragung von Datensignalen als SYN-Zeichen bekannt sind. Dabei wird so vorgegangen, daß erst nach der Ermittlung wenigstens eines derartigen SYN-Zeichens pro Signalleitung mit der Datenübertragung zu einem gewünschten Datenempfänger hin begonnen wird. In diesem Zusammenhang ist es also ohne weiteres möglich, das Auftreten bestimmter Bitmuster, wie des SYN-Zeichens, mehrmals nacheinander zu überwachen, bevor mit einer Datenübertragung begonnen wird. Überdies ist es ohne weiteres möglich, das Vorliegen wenigstens eines Prüfschleifensignals - durch das eine Prüfschleife in der betrachteten Anordnung von einer der vorhandenen Signalleitungen zu einer Signalabgabeleitung (nicht dargestellt) wirksam gesteuert wird - mit Vorrang zu überwachen.

Im Hinblick auf die dem Taktanschluß t zugeführten Taktimpulse sei noch angemerkt, daß diese mit einer Taktrate auftreten, die ein ganzzahliges Vielfaches der Taktraten ist, mit der die Signalbits auf den Signalleitungen e1, e2 und e3 auftreten. In diesem Fall werden der Zähler Cnt und das Register Reg der der jeweiligen Signalleitung e1, e2, e3 zugehörigen Signalaufnahmeeinrichtung Ae1, Ae2 bzw. Ae3 lediglich mit der Rate betrieben, welche der Taktrate entspricht, mit der die Signalbits auf der betreffenden zugehörigen Signalleitung e1 bzw. e2 bzw. e3 auftreten.

Abschließend sei noch darauf hingewiesen, daß in der Zeichnung die Signalaufnahmeeinrichtungen zwar aus diskreten Einheiten aufgebaut dargestellt sind. Es dürfte jedoch einzusehen sein, daß die die einzelnen Signalaufnahmeeinrichtungen bildenden Einrichtungen Teil des verwendeten Mikroprozessors Mp sein können. In diesem Falle wäre der betreffende Mikroprozessor Mp mit verschiedenen Anschlüssen bzw. sogenannten Ports mit den Signalausgängen der vorhandenen bistabilen Kippglieder K1, K2, K3 verbunden.

3 Patentansprüche
1 Figur

0166274

## Patentansprüche

1. Schaltungsanordnung zum Ermitteln bestimmter Bitmuster, insbesondere von Synchronisiersignale und Prüfschleifensignale bildenden Bitmustern, in auf einer Mehrzahl von Signalleitungen (e1, e2, e3) seriell auftretenden binären Signalen, mit einer Registeranordnung (Reg) für die serielle Aufnahme der betreffenden binären Signale und mit einer Vergleicheranordnung (Mp), welche jeweils eine vorgegebene Anzahl von Bits der jeweils aufgenommenen binären Signale mit wenigstens einer vorgegebenen Bitkombination vergleicht und welche bei Feststellen einer Übereinstimmung zwischen der jeweiligen Bitkombination und den in der vorgegebenen Anzahl erfaßten Bits der aufgenommenen binären Signale ein die Ermittlung eines bestimmten Bitmusters anzeigendes Meldesignal abgibt, d a d u r c h   g e k e n n z e i c h n e t , daß die Registeranordnung (Reg) den einzelnen Signalleitungen (e1, e2, e3) individuell zugeordnete Register bzw. Speicherbereiche (Reg) eines Mikroprozessors (Mp) bzw. Mikrocomputers (MC) umfaßt, daß jedes Register (Reg) bzw. jeder Speicherbereich eingangsseitig am Ausgang eines in der zugehörigen Signalleitung (e1, e2, e3) liegenden taktgeteuerten bistabilen Kippgliedes (K1, K2, K3) angeschlossen und ausgangsseitig mit einer Signalübernahmeschaltung (Tr1, Tr2, Bf) verbunden ist, daß jede Signalübernahmeschaltung (Tr1, Tr2, Bf) von dem Mikroprozessor (Mp) bzw. Mikrocomputer (MC) her entsprechend dem Takt von die Taktsteuerung der bistabilen Kippglieder bewirkenden Taktimpulsen den Inhalt ihres zugehörigen Registers (Reg) bzw. Speicherbereiches zu dem Mikroprozessor (Mp) bzw. Mikrocomputer (MC) überträgt, in welchem dieser Inhalt mit der jeweiligen vorgegebenen Bitkombination verglichen wird, daß bei Ermittlung einer Übereinstimmung der betreffenden Bits mit der jeweiligen Bitkombination von dem Mikroprozessor (Mp) bzw. Mikrocomputer (MC) ein Ein-

0166274

stellsignal an einen durch die der zugehörigen Registeranordnung zugeführten Bits in seiner Zählerstellung veränderbaren Zähler (Cnt) abgegeben wird, der daraufhin in
eine definierte Zählerstellung gebracht wird,
und daß der der jeweiligen Signalübernahmeschaltung zugehörige Zähler (Cnt1) sodann jeweils bei Erreichen einer vorgegebenen Zählerstellung ein Ausgangssignal abgibt, mit
dessen Hilfe die Übernahme der in dem zugehörigen Register (Reg) bzw. Speicherbereich der betreffenden Signalübernahmeschaltung enthaltenen Bits in eine Verarbeitungseinrichtung (Mp) gesteuert wird.

2. Schaltungsanordnung nach Anspruch 1, d a d u r c h
g e k e n n z e i c h n e t , daß die in den einzelnen
Signalleitungen (e1, e2, e3) liegenden bistabilen Kippglieder (K1, K2, K3) alle gemeinsam durch ein einziges
Taktsignal bildende Taktimpulse taktgesteuert sind.

3. Schaltungsanordnung nach Anspruch 1, d a d u r c h
g e k e n n z e i c h n e t , daß die jeweilige Signalübernahmeschaltung gesonderte Signalübertragungs-Verknüpfungsanordnungen (Tr1; Tr2, Bf) umfaßt, deren eine durch
Steuersignale vom Mikroprozessor (Mp) bzw. Mikrocomputer
(MC) her ansteuerbar ist und deren andere durch Steuersignale vom zugehörigen Zähler (Cnt) her ansteuerbar ist.